# EUROPÄISCHE PATENTSCHRIFT

(11) **EP 0 985 241 B1**
(45) Veröffentlichungstag und Bekanntmachung des Hinweises auf die Patenterteilung: **22.08.2001**
(21) Anmeldenummer: 98933471.9
(22) Anmeldetag: 04.05.1998
(51) Int. Cl.: H01M 8/24, H01M 8/04, H01M 8/06

(54) **INTEGRALER PEM-BRENNSTOFFZELLEN-HEIZUNGSMODUL UND DESSEN VERWENDUNG SOWIE PEM-BRENNSTOFFZELLENSTAPEL**
INTEGRAL PEM FUEL CELL HEATING MODULE AND THE USE THEREOF, AND PEM FUEL CELL STACKS
MODULE DE CHAUFFAGE MONOBLOC A CELLULES ELECTROCHIMIQUES A MEMBRANE ELECTROLYTIQUE EN POLYMERE, SON UTILISATION ET PILE DE CELLULES ELECTROCHIMIQUES A MEMBRANE ELECTROLYTIQUE EN POLYMERE

(30) Priorität: 05.05.1997 DE 19718970
(43) Veröffentlichungstag der Anmeldung: 15.03.2000
(73) Patentinhaber: Zentrum für Sonnenenergie- und Wasserstoff-Forschung Baden-Württemberg Gemeinnützige Stiftung, 70565 Stuttgart (DE)
(72) Erfinder: ROHLAND, Bernd, D-89081 Ulm (DE); SCHOLTA, Joachim, D-89233 Neu-Ulm (DE); ZETTISCH, Georg, D-89073 Ulm (DE); EPPLE, Wolfgang, D-88471 Laupheim (DE); PLZAK, Vojtech, D-73207 Plochingen (DE)
(74) Vertreter: Merkle, Gebhard
(86) Internationale Anmeldenummer: DE9801271
(87) Internationale Veröffentlichungsnummer: WO9850975

(56) Entgegenhaltungen:
- US-A- 5 262 249
- US-A- 5 360 679
- US-A- 5 543 238
- US-A- 5 573 866
- PATENT ABSTRACTS OF JAPAN vol. 012, no. 080 (E-590), 12.März 1988 & JP 62 219471 A (TOKYO ELECTRIC POWER CO INC:THE;OTHERS: 02), 26.September 1987,

## Beschreibung

Die vorliegende Erfindung betrifft einen integralen Polymer-Elektrolyt-Membran (PEM)-Brennstoffzellen-Heizungsmodul und dessen Verwendung sowie einen PEM-Brennstoffzellenstapel zur Verwendung in einem solchen Heizungsmodul. Der erfindungsgemäße Heizungsmodul findet insbesondere Anwendung in einer Brennstoffzellenanlage für die Hausenergieversorgung.

Stationäre PEM-Brennstoffzellen setzen reinen Wasserstoff in Strom und nutzbare Wärme um. Sie erreichen dabei einen Gasnutzungsgrad von über 90% und einen elektrischen Wirkungsgrad von 40% bei Vollast bis 65% bei Teillast. Das Temperaturniveau der zu Heizzwecken auskoppelbaren Wärme beträgt 50-75°C.

Es ist bekannt, daß die Polymerelektrolytmembran von PEM-Brennstoffzellen durch die Reaktionsgase entweder mit externen Wassersättigern oder durch eine Selbstbefeuchtungseinrichtung befeuchtet werden muß, um sie bei Betriebstemperaturen von 60 bis 80°C vor dem Austrocknen zu bewahren. Die externe Befeuchtung erfordert einen teuren und energetisch uneffektiven, zusätzlichen apparativen Aufwand, der zudem bei schnellen Lastwechseln nicht beherrschbar ist und zu Leistungs- oder Wirkungsgradeinbußen infolge Austrocknung oder zellinterner Kondensation führt. Eine Selbstbefeuchtung durch ein in die Polymerelektrolytmembran eingebundenes Platinnetz, wie in J. Electrochem. Soc., Band 143, Nr. 12, Dezember 1996, vorgeschlagen. steigert die Kosten der Brennstoffzellen durch zu hohen Edelmetallverbrauch.

Weiterhin ist es bekannt, PEM-Brennstoffzellen für die Hausenergieversorgung mit Erdgas oder Methanol als Brennstoffe zu betreiben. Erdgas oder Methanol müssen hierbei mit Wasserdampf zu Wasserstoff und CO₂ reformiert und das Reformergas von Kohlenmonoxid gereinigt werden. Die hierfür erforderlichen Reinigungseinrichtungen sind im Falle der Erdgasreformierung mit einem Anteil von 12% Kohlenmonoxid im Reformergas nur bei Anlagen mit einer Leistung oberhalb 100 kW mit vertretbarem energetischem und apparativem Aufwand betreibbar. Für die Hausenergieversorgung mit PEM-Brennstoffzellen bei Betriebsleistungen von 2-20 kW kommt daher die Methanolreformierung in Frage. Obwohl die Reformiertemperatur hier nur 200°C gegenüber 700°C bei der Erdgasreformierung beträgt, enthält das Methanol-Reformergas bis etwa 10.000 ppm Methanoldampf und 1.000-2.000 ppm Kohlenmonoxid (CO), das mittels teuren Ag/Pd-Membranen abgetrennt werden muß.

CO-Gehalte bis 100 ppm können durch Zudosieren von 500 ppm O₂ zum Reformergas an der PEM-Brennstoffzellenanode aus Kohle /Pt-Ru bei der Betriebstemperatur der PEM-Brennstoffzelle zu CO₂ oxidiert werden.

Gemäß der EP 0 577 291 A 1 kann die PEM-Brennstoffzellenanode auch aus zwei verschiedenen Edelmetall-Katalysatorkomponenten hergestellt und die CO-Empfindlichkeit der Anode dadurch deutlich verbessert werden. Die im Methanol-Reformergas vorhandenen 1.000-2.000 ppm CO sowie 5.000-10.000 ppm Methanoldampf können jedoch von einer derartigen PEM-Brennstoffzellenanode nicht umgesetzt werden, sondern müssen mittels aufwendiger, vorgeschalteter Reinigungsstufen bis auf 100 ppm abgetrennt werden. Ferner reicht der im Wasserstoff vorhandene Wasserdampf, welcher mit der CO-Oxidation durch den zudosierten Überschußsauerstoff gebildet wird, zur anodenseitigen Membranbefeuchtung nicht aus. Darüber hinaus verändert der Überschußsauerstoff im Verlaufe der Betriebszeit die Anode irreversibel, indem der Kohlenstoffträger des Katalysators oxidativ angegriffen wird.

Der Erfindung liegt die Aufgabe zugrunde, einen PEM-Brennstoffzellen-Heizungsmodul vorzusehen, der ohne externe Befeuchtungseinrichtung bei schnell wechselnder Stromlast eine konstante optimale Befeuchtung sowohl der Kathodenseite als auch der Anodenseite der Polymerelektrolytmembran gewährleistet und für die Hausenergieversorgung im Größenbereich von 2-20 kW mit Methanol-Reformergas ohne zusätzliche CO-Reinigungseinrichtung eingesetzt werden kann.

Diese Aufgabe wird erfindungsgemäß durch einen integralen PEM-Brennstoffzellen-Heizungsmodul gemäß Anspruch 1 gelöst. Vorteilhafte beziehungsweise besonders zweckmäßige Ausgestaltungen des Erfindungsgegenstandes sind in den weiteren Ansprüchen angegeben.

Der Gegenstand der Erfindung ist somit ein integraler Polymer-Elektrolyt-Membran (PEM)-Brennstoffzellen-Heizungsmodul, umfassend einen PEM-Brennstoffzellenstapel, wobei jede Brennstoffzelle des Stapels eine Polymerelektrolytmembran, eine Anode auf der einen und eine Kathode auf der anderen Seite der Membran, eine Gasverteilerschicht auf der Anodenseite, eine Gasverteilerschicht auf der Kathodenseite sowie Bipolarplatten, welche an die Gasverteilerschichten angrenzen, umfaßt, wobei die Anode als Dreischichtanode ausgebildet ist, die eine CO- und/oder Methanoldampf-oxidationsselektive Katalysatorschicht auf der der Membran abgewandten Seite und eine elektrochemisch aktive Schicht, auf der der Membran zugewandten Seite sowie ein Kontaktschicht aus porösem Kohlepapier zwischen der Katalysatorschicht und der elektrochemisch aktiven Schicht umfaßt, und wobei die Gasverteilerschicht Luftkanäle mit freien Eintritts- und Austrittsöffnungen aufweist: einen den PEM-Brennstoffzellenstapel umgebenden, thermisch isolierten, gasdichten, röhrenförmigen Hohlmantel (M); einen Methanolreformer (R), welcher aus Wasserdampf und Methanol ein CO und Methanoldampf enthaltendes Wasserstoff-Brenngas erzeugt, wobei Wasserdampferzeugung und Reformerheizung durch einen katalytischen Restgasbrenner (B) bewirkt werden: und einen innerhalb des Hohlmantels (M) angeordneten Umlüfter (L), welcher feuchte Luft durch die Luftkanäle der Gasverteilerschicht zirkuliert.

Beim Betrieb des erfindungsgemäßen Heizungsmoduls wird sowohl die Kathodenseite als auch die Anodenseite der Polymerelektrolytmembran optimal befeuchtet. Daneben gelingt eine zellinterne CO- und CH₃OH-Feingasreinigung, bei der die im Methanol-Reformergas enthaltenen 1.000-2.000 ppm CO und 5.000-10.000 ppm CH₃OH zu CO₂ oxidiert werden.

Beim erfindungsgemäßen Heizungsmodul ist der PEM-Brennstoffzellenstapel in einem gasdichten, thermisch isolierten, röhrenförmigen Hohlmantel integriert, wobei die kathodenseitige Befeuchtung der Polymerelektrolytmembran mit der Reaktionswasser enthaltenden Kathodenausgangsluft durch Rezirkulation zur KathodenluftEingangsseite erfolgt. Diese Umluft-Zirkulation der feuchten Kathodenausgangsluft erfolgt mit vielfacher, vorzugsweise 2- bis 3-facher Strömungsgeschwindigkeit gegenüber der Trockenfrischluftzufuhr beziehungsweise Feuchtluftabfuhr. die beim Betrieb des Heizungsmoduls mit der Strombelastung geregelt werden, so daß keine separate Luftbefeuchtung notwendig ist.

Die anodenseitige Membranbefeuchtung wird beim erfindungsgemäßen Heizungsmodul durch die als Dreischichtanode ausgebildete Zellanode jeder Brennstoffzelle erreicht. Die CO- und Methanoldampf-oxidationsselektive Katalysatorschicht dieser Dreischichtanode oxidiert neben dem CO des Methanol-Reformergases gleichzeitig so viel Wasserstoff zu Wasser beziehungsweise Wasserdampf, daß die anodenseitige Befeuchtung der Membran gewährleistet ist. Wenn das Methanol-Reformergas beispielsweise 2.000 ppm CO enthält, werden gleichzeitig circa 10.000 ppm (1%) Wasserstoff zu Wasserdampf oxidiert. Die dabei auftretende Wärmeentwicklung beträgt etwa 2% der gesamten Wärmeerzeugung und wird über die metallische, poröse Dreischicht-Anodenplatte zur metallischen Bipolarplatte abgeleitet, von der sie kathodenseitig durch die Umluft an einen an der Kathodenluft-Ausgangsseite installierten Wärmeübertrager abgegeben wird.

Bei einer Ausführungsform der Erfindung ist der Methanolreformer über dem PEM-Brennstoffzellenstapel und innerhalb des Hohlmantels angeordnet. Der für den Methanolreformer erforderliche Wasserdampf und die Heizung des Reformers werden durch katalytische Restgasverbrennung des von dem PEM-Brennstoffzellenstapel kommenden, nicht vollständig, beispielsweise nur zu 90% umgesetzten Wasserstoffs bewirkt. Vorteilhafterweise ist hierbei der Methanolreformer mit katalytischem Restgasbrenner so angeordnet, daß er von der zirkulierenden, warmen Umluft zusätzlich beheizt wird. Dies erfolgt dadurch, daß die feuchte Umluft vom Umlüfter durch die kathodenseitigen Luftkanäle der PEM-Brennstoffzellen und danach über den PEM-Brennstoffzellenstapel zur Umlüfterrückseite zirkuliert wird.

Bei einer anderen Ausführungsform der Erfindung sind der Methanolreformer und der katalytische Restgasbrenner nicht innerhalb des Hohlmantels angeordnet, sondern sind zusammen mit einem Reformergas-Starttank und einem elektrochemischen H₂-Kompressor zu einer externen Einheit zusammengefaßt. Bei dieser Ausführungsform entfällt die zusätzliche Beheizung des Reformers durch die warme Umluft. Andererseits kann eine verbesserte Regelcharakteristik der Reformergaserzeugung und -speicherung im Starttank erreicht werden.

Als Umlüfter kann bei dem erfindungsgemäßen Heizungsmodul geeigneterweise ein Lüfter-Propeller eingesetzt werden.

Die oxidationsselektive Katalysatorschicht der erfindungsgemäß vorgesehenen Dreischichtanode besteht geeigneterweise aus einer elektrisch leitenden Matrix und einem oxidischen Trägermaterial, das mit metallischen, oxidationsselektiven Katalysatorpartikeln belegt ist. Als Material für die elektrisch leitende Matrix eignet sich beispielsweise ein Metallfilz, wie Nickelschwamm oder Graphit. Das oxidische Trägermaterial verstärkt die katalytische Wirkung und ist beispielsweise aus Zirkoniumoxid, Titandioxid, Kobaltoxid, Ceroxid, Praesodymiumoxid, Yttriumoxid, deren Mischungen oder Mischoxiden hiervon gebildet. Die spezifische Oberfläche dieser oxidischen Trägermaterialien beträgt geeigneterweise 1 bis 100 m²/g. vorzugsweise mehr als 10 m²/g. Die oxidationsselektiven Katalysatorpartikel sind geeigneterweise aus Edelmetall, wie etwa Gold, Ruthenium, Rhodium oder deren Legierungen gebildet.

Die elektrochemisch aktive Schicht der Dreischichtanode ist aus Materialien gebildet, wie sie üblicherweise für PEM-Anoden verwendet werden.

Die Kontaktschicht aus porösem Kohlepapier zwischen der Katalysatorschicht und der elektrochemisch aktiven Schicht verhindert eine negative Beeinflussung der Lebensdauer der Katalysatorschicht durch den direkten Kontakt zwischen Anode und Katalysatorschicht. Für diese Kontaktschicht eignen sich im Handel erhältliche poröse Kohlepapiere mit Dicken von üblicherweise 20-100 µm.

Die protonenleitende Polymerelektrolytmembran besteht aus üblicherweise für PEM-Zellen verwendeten Materialien, wie sie etwa unter der Handelsbezeichnung Nafion erhältlich sind. Diese Polymermembran wird in an sich bekannter Weise auf beiden Seiten mit je einer Elektrode versehen, welche geeigneterweise aus einem katalytisch aktivierten Trägersubstrat und Bindemitteln bestehen, beispielsweise Kohlenstoffruß und Polytetrafluorethylen. Als Katalysatoren kommen an sich bekannte Materialien in Betracht, welche eine ausreichend hohe Aktivität für die Wasserstoffoxidation beziehungsweise -reduktion aufweisen, vorzugsweise Metalle und Legierungen der Platin-Gruppe.

Gegenstand der Erfindung ist ebenso die Verwendung eines wie oben beschriebenen PEM-Brennstoffzellen-Heizungsmoduls in einer Brennstoffzellenanlage für die Hausenergieversorgung mit einer Betriebsleistung von typischerweise 2-20 kW.

Die Erfindung wird anhand der beiliegenden Zeichnungen, welche bevorzugte Ausführungsformen der Erfindung wiedergeben, näher erläutert. Hierbei zeigen:
**Fig. 1** schematisch den Aufbau eines erfindungsgemäßen PEM-Brennstoffzellen-Heizungsmoduls;
**Fig. 2** schematisch den Aufbau einer einzelnen PEM-Brennstoffzelle;
**Fig. 3** schematisch den Aufbau eines PEM-Brennstoffzellenstapels;
**Fig. 4** schematisch die Anordnung der Bipolarplattenelemente einschließlich Elektrodeneinheit; und
**Fig. 5** schematisch die Anordnung der Kühlplattenelemente.

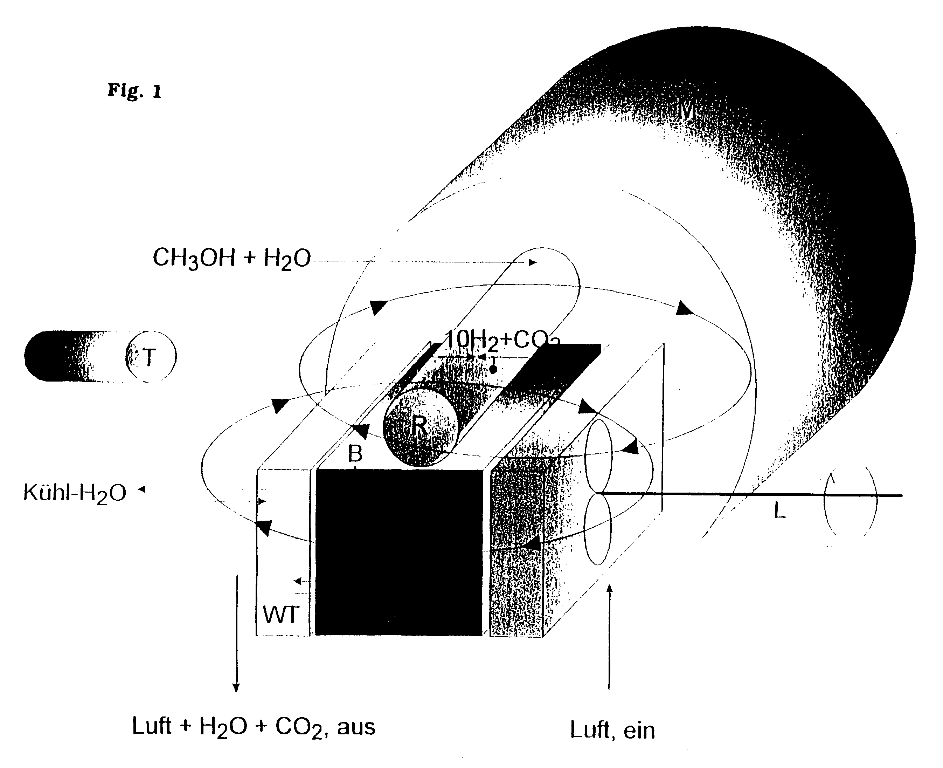

Der in Fig. 1 gezeigte, integrale PEM-Brennstoffzellen-Heizungsmodul besteht aus einem PEM-Brennstoffzellenstapel FC, einem Lüfter-Propeller L, Wärmeübertrager WT, Methanolreformer R, Anodenrestgasbrenner B. Reformergastank T und einem gasdichten, alles umschließenden Hohlmantel M.

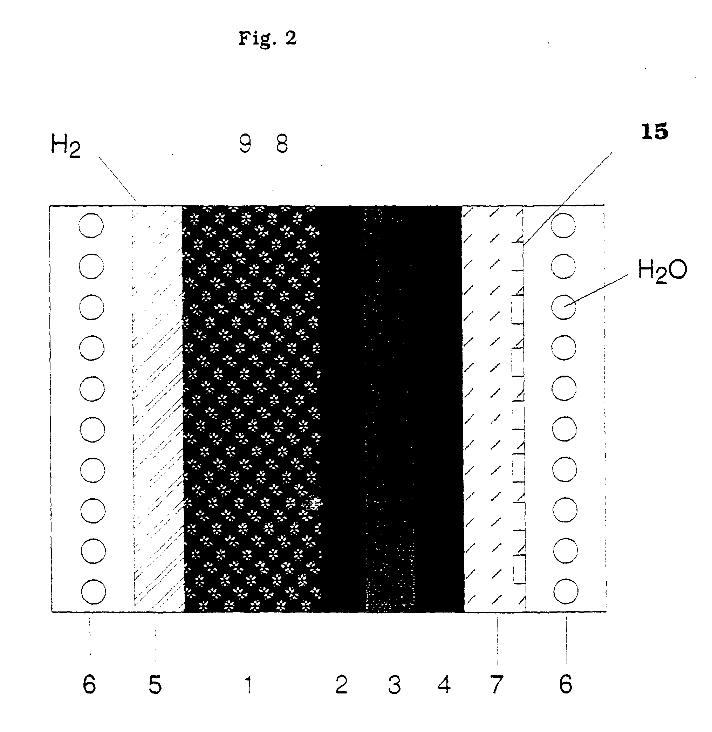

Der PEM-Brennstoffzellenstapel besteht geeigneterweise aus 20 bis 100 elektrisch in Serie geschalteten und hintereinander gestapelten PEM-Brennstoffzellen. Der schematische Aufbau einer einzelnen Brennstoffzelle ist in Fig. 2 gezeigt. Sie umfaßt eine Dreischichtanode aus einer oxidationsselektiven Katalysatorschicht in Form einer porösen Anodenplatte 1 und einer Pt-Ru/C-Anode 2 sowie einer Kontaktschicht (nicht gezeigt) am porösen Kohlepapier zwischen den Schichten 1 und 2, eine Polymerelektrolytmembran 3, eine Pt/C-Kathode 4, eine metallische Gasverteilerschicht 5, eine metallische Gasverteilerschicht 7 mit Luftkanälen 15 sowie Bipolar-/Kühlplatten 6. Die Luftkanäle 15 sind zur angrenzenden Bipolar-/Kühlplatte 6 offen.

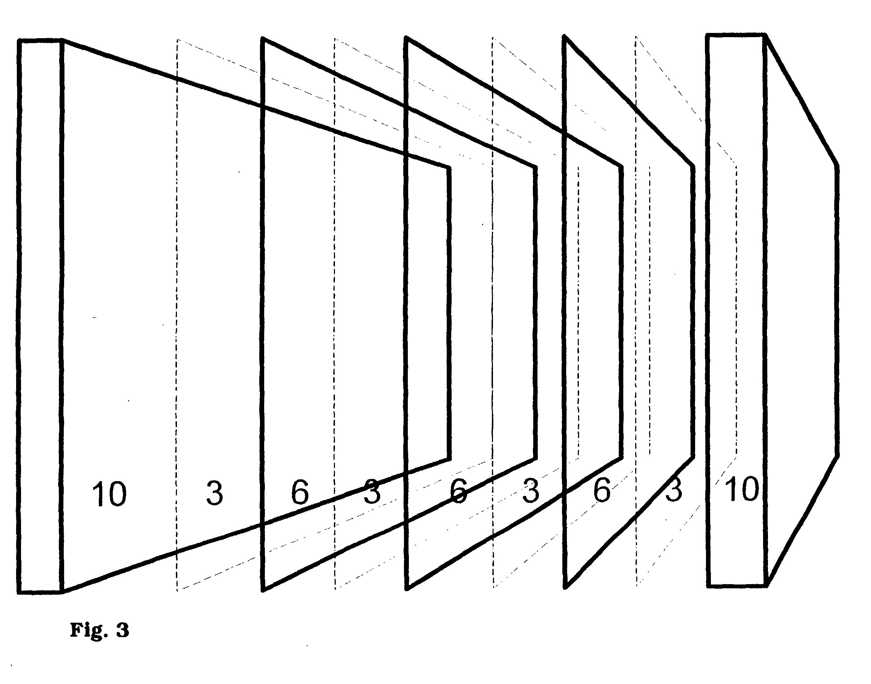

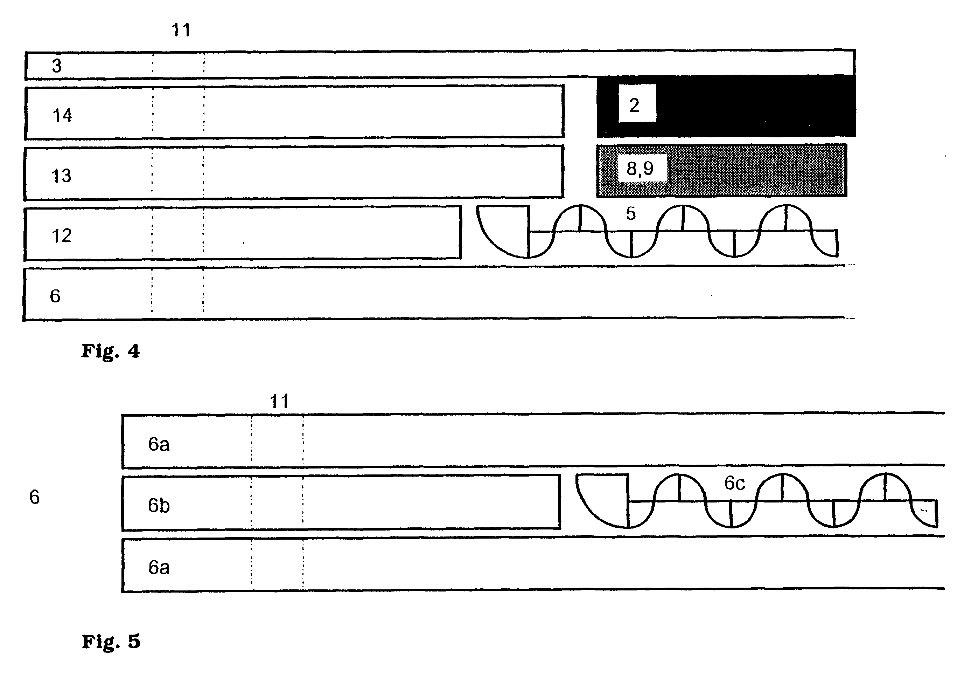

Die Fig. 3 zeigt schematisch die Anordnung des aufgebauten Brennstoffzellenstapels. Der Zellenstapel besteht aus zwei Endplatten 10, welche die Verschraubungen für die Gas- und Kühlmittelanschlüsse sowie Anschlüsse zur Stromabführung und Potentialmessung (nicht gezeigt) enthalten. Die zellseitige Ausführung der Endplatten ist identisch mit derjenigen des Bipolarplattenelementes 6. An die Endplatte anschließend folgen vier Zelleinheiten, deren Aufbau elektroden-/katalysatorseitig in Fig. 2 und dichtungs-/gasführungsseitig in Fig. 4 wiedergegeben ist.

Der gesamte anodenseitige Aufbau ruht auf einer ebenen Bipolarplatte 6, welche an den Rändern mit Löchern für Verschraubungen und Gas-/Kühlmitteldurchführungen versehen ist. Darauf folgt eine Gasverteilungseinheit 5, welche außen von einer strukturstabilen Dichtung mit einer Gasdurchführung umgeben ist. Von der Gasdurchführung führen Kanalöffnungen in den die Gasverteilungseinheit 5 enthaltenden Innenraum. Die Dichtung 12 deckt den Randbereich der bipolaren Platte ab. Im Innenraum befindet sich die Gasverteilungseinheit 5, welche z.B. aus einem strukturierten Filz besteht. Die Bipolar-/Kühlplatte 6 besteht in den Randelementen 6a (Fig. 5) zum Beispiel aus Edelstahl in der Qualität 1.4404, die Dichtung 12 z.B. aus Silikon. Auf dieser befindet sich ein z.B. aus dem genannten Edelstahl ausgeführtes Stützelement 13, welches bis auf die zum Innenbereich führenden Kanäle der Dichtung 12 die gleichen Bohrungen enthält. Das Stützelement 13 ermöglicht eine Abdichtbarkeit der gegenüberliegenden Seite der Zelle, da mit Hilfe dieses Stützelements auch über den durch die Dichtung 12 gebildeten Gasdurchführungen eine Andruckkraft ausgeübt werden kann. Auf dem Stützelement 13 befindet sich ein Dichtungselement 14, welches die gleiche. Form aufweist wie das Stützelement 13 und z.B. aus geblähtem Polytetrafluorethylen besteht.

Der Aufbau der Bipolarplatte mit Kühleinheit 6 ist in Fig. 5 wiedergegeben. Diese Einheit besteht aus zwei wie oben beschriebenen Bipolarplatten 6a, zwischen denen sich ein Dichtungselement 6b befindet. Dieses entspricht in seinem Aufbau der beschriebenen Dichtung 12, enthält jedoch von den Kanälen 11 zum Innenraum führende Kanäle an der Stelle der zum Kühlwassertransport verwendeten Kanäle. Im Innenraum der Bipolarplatte mit Kühleinheit 6 befindet sich ein Stützelement 6c, welches z.B. als Titannetz ausgeführt ist.

Nach beispielsweise einer 20-fachen Wiederholung der obengenannten Einheitenabfolge schließt sich die zweite Endplatte 10 an, um den Brennstoffzellenstapel zu vervollständigen. Die Gas- und Kühlmitteldurchführungen sind so ausgeführt, daß für alle Gas- und Kühlmittelströme eine diagonale Strömungsrichtung resultiert. Das Anodenreformergas wird über Kanäle 11 in dem Stapel intern auf die einzelnen Zellen verteilt und die Luft wird über die seitlich offene, kanalförmige Kathodengas-Verteilerschicht 7 den Kathoden über den Umluftstrom zugeführt. Die poröse Katalysatorschicht 1 der Dreischichtanode besteht aus Nickelschwamm 8 und den mit Edelmetall belegten, oxidischen Katalysatorpartikeln 9 mit großer innerer Oberfläche.

Der PEM-Brennstoffzellen-Heizungsmodul wird gestartet, indem bei Elektroenergie- oder Wärmebedarf die Brennstoffzellen-Dreischichtanoden vom Reformergas-Starttank mit Brenngas versorgt und der Umluft-Propeller sowie die Frischluftzufuhr in Gang gesetzt werden. Mit einem zeitlichen Abstand von weniger als 3 Sekunden wird der dem Bedarf entsprechende Strom entnommen und der Reformergasstrom sowie die Frischluftzufuhr diesem Strom entsprechend dem Faraday schen Gesetz so über Strömungsregler eingestellt. daß zunächst 50%, nach 10 Minuten 90% des Wasserstoffs und 30% des Luftsauerstoffs umgesetzt werden. Es werden zunächst 50%, dann 10% des umgesetzten Reformergases im katalytischen Anoden-restgasbrenner B umgesetzt. wodurch der Methanolreformer auf 200°C geheizt wird. Ist diese Temperatur erreicht, setzt eine strombedarfsgeregelte Methanol-Dosierpumpe den Reformingprozeß in Gang und der Reformergas-Starttank wird abgeschaltet. Der PEM-Brennstoffzellen-Heizungsmodul arbeitet nun dynamisch im wahlweise strombedarfs- oder wärmebedarfs-geführten Betrieb.

Bei wärmebedarfs-geführtem Betrieb wird bis zum Erreichen der Soll-Vorlauftemperatur am Wärmeübertrager der Strom auf Vollast (40% elektrischer Wirkungsgrad) gestellt, nachdem die Methanoldosierung und Frischluftzufuhr auf Vollast eingeregelt wurden. Bei Überschreiten der Soll-Vorlauftemperatur werden Strom- und Gaszufuhr beziehungsweise Methanolzufuhr solange auf Teillast gedrosselt, bis die Soll-Vorlauftemperatur eingestellt ist. Zum Einstellen einer konstanten Vorlauftemperatur bei unterschiedlichem Wärmebedarf wird eine PID-Regelung aktiviert, die auf der modulinternen Proportionalität zwischen Strom und Vorlauftemperatur basiert. Elektrischer Überschußstrom wird in das Netz eingespeist.

Bei strombedarfs-geführtem Betrieb wird der DC-Zellstrom direkt über den AC-Stromverbrauch eingestellt. Da hier die Übergangszeiten im Sekundenbereich liegen, kann nur die Einregelung des Frischluft- und Umluftstromes zeitlich folgen, nicht aber der Methanolreformer. Deshalb wird der Reformergas-Starttank wieder als Puffer zugeschaltet. Sein ständiger Füllstand (Solldruck) wird durch einen geregelten Bypassstrom vom Reformer gewährleistet. Überschußwärme kann als Heißwasser gespeichert werden.

Die Grenzen für extremen Teillastbetrieb sind beim erfindungsgemäßen Heizungsmodul nicht mehr durch die erforderliche Befeuchtung der Membran festgelegt. Sie sind bei wärmebedarfs-geführtem Betrieb dadurch gegeben, daß die Vorlauftemperatur bei 25% Vollast 40°C unterschreitet, weil dann keine effektive Wärmenutzung mehr möglich ist. Bei strombedarfs-geführtem Betrieb wird diese Grenze erreicht, wenn die katalytische Anoden-Restgasverbrennung nicht mehr ausreicht, um den Reformer auf 200°C zu beheizen. Durch höheren Restgasanteil kann hier der Betrieb bis zu 10% Vollast aufrechterhalten werden, ehe der PEM-Brennstoffzellen-Heizungsmodul abgeschaltet und auf Netz-Restbezug umgeschaltet werden muß.

Der PEM-Brennstoffzellen-Heizungsmodul gemäß einer weiteren Ausführungsform der Erfindung enthält bei sonst gleichem Aufbau nicht den Methanolreformer und den katalytischen Anoden-Restgasbrenner. Diese Aggregate sind zusammen mit dem Reformergas-Starttank und einem elektrochemischen H₂-Kompressor zu einer externen Einheit zusammengefaßt. Hierbei kann der Reformer nicht durch die warme Umluft zusätzlich beheizt werden. Es wird jedoch eine verbesserte Regelcharakteristik der Reformergaserzeugung und -speicherung im Starttank erreicht.

## Patentansprüche

1. Integraler Polymerelektrolytmembran (PEM)-Brennstoffzellen-Heizungsmodul, umfassend
einen PEM-Brennstoffzellenstapel, wobei jede Brennstoffzelle des Stapels eine Polymerelektrolytmembran (3), eine Anode auf der einen und eine Kathode (4) auf der anderen Seite der Membran, eine Gasverteilerschicht (5) auf der Anodenseite, eine Gasverteilerschicht (7) auf der Kathodenseite sowie Bipolarplatten (6), welche an die Gasverteilerschichten (5, 7) angrenzen, umfaßt, wobei die Anode als Dreischichtanode ausgebildet ist, die eine CO- und/oder Methanoldampf-oxidationsselektive Katalysatorschicht (1) auf der der Membran abgewandten Seite und eine elektrochemisch aktive Schicht (2), auf der der Membran zugewandten Seite sowie eine Kontaktschicht aus porösem Kohlepapier zwischen den Schichten (1) und (2) umfaßt, und wobei die Gasverteilerschicht (7) Luftkanäle (15) mit freien Eintritts- und Austrittsöffnungen aufweist:
einen den PEM-Brennstoffzellenstapel umgebenden, thermisch isolierten, gasdichten, röhrenförmigen Hohlmantel (M);
einen Methanolreformer (R), welcher aus Wasserdampf und Methanol ein CO und Methanoldampf enthaltendes Wasserstoff-Brenngas erzeugt, wobei Wasserdampferzeugung und Reformerheizung durch einen katalytischen Restgasbrenner (B) bewirkt werden; und
einen innerhalb des Hohlmantels (M) angeordneten Umlüfter (L), welcher feuchte Luft durch die Luftkanäle (15) der Gasverteilerschicht (7) zirkuliert.

2. Integraler PEM-Brennstoffzellen-Heizungsmodul nach Anspruch 1, wobei der Methanolreformer (R) mit Restgasbrenner (B) über dem PEM-Brennstoffzellenstapel und innerhalb des Hohlmantels (M) angeordnet ist.

3. Integraler PEM-Brennstoffzellen-Heizungsmodul nach Anspruch 2, wobei der Methanolreformer (R) mit katalytischem Restgasbrenner (B) so angeordnet ist, daß er von der zirkulierenden, warmen Umluft zusätzlich beheizt wird.

4. Integraler PEM-Brennstoffzellen-Heizungsmodul nach Anspruch 1, wobei der Methanolreformer (R) mit Restgasbrenner (B) zusammen mit einem Reformergas-Starttank und einem elektrochemischen H₂-Kompressor zu einer externen Einheit zusammengefaßt sind.

5. Integraler PEM-Brennstoffzellen-Heizungsmodul nach mindestens einem der Ansprüche 1 bis 4, wobei am Ausgang der Luftkanäle (15) innerhalb des Hohlmantels ein Kühlwasser führender Wärmeübertrager angeordnet ist, der über sein Kühlwasser die Wärme des Umluftstromes aufnimmt und zu Heizzwecken so auskoppelt, daß die Temperaturdifferenz innerhalb des PEM-Brennstoffzellenstapels nicht mehr als etwa 10°C beträgt.

6. Integraler PEM-Brennstoffzellen-Heizungsmodul nach mindestens einem der Ansprüche 1 bis 5, wobei der Umlüfter (L) ein Lüfter-Propeller ist.

7. Integraler PEM-Brennstoffzellen-Heizungsmodul nach mindestens einem der Ansprüche 1 bis 6, wobei die oxidationsselektive Katalysatorschicht (1) der Dreischichtanode eine elektrisch leitende Matrix (8) und ein oxidisches Trägermaterial, das mit metallischen, oxidationsselektiven Katalysatorpartikeln (9) belegt ist, umfaßt.

8. Integraler PEM-Brennstoffzellen-Heizungsmodul nach mindestens einem der Ansprüche 1 bis 7, wobei die Bipolarplatte (6) eine aufeinanderfolgende Anordnung von Einzelelementen aufweist, welche insgesamt die Funktionen Gasraumtrennung und Gasverteilung erfüllen.

9. Integraler PEM-Brennstoffzellen-Heizungsmodul nach Anspruch 8, wobei die aufeinanderfolgenden Elemente zwischen zwei Membranen (3) bestehen aus: Dichtung (14), Stützelement (13), Dichtung (12), Gasverteilungseinheit (5), Bipolarplatte (6), Gasverteilungselement (7), gegebenenfalls mit integrierter Dichtung, Dichtung (12), Stützelement (13), Dichtung (14).

10. Integraler PEM-Brennstoffzellen-Heizungsmodul nach Anspruch 9, wobei auf die Bipolarplatte (6) als Außenelement die Dichtung (12) und das Stützelement (13) sowie als Innenelement die Gasverteilungseinheit (5) aufsitzt.

11. Integraler PEM-Brennstoffzellen-Heizungsmodul nach Anspruch 9 und/oder 10, wobei die auf der Bipolarplatte (6) aufsitzende Dichtung (12) einen größeren Ausschnitt als das darüberliegende Stützelement (13) aufweist, so daß der Rand des Gasverteilungselements (5) von dem Stützelement (13) abgedeckt wird.

12. Integraler PEM-Brennstoffzellen-Heizungsmodul nach mindestens einem der Ansprüche 1-11, wobei die Bipolarplatte (6) als Bipolar-/Kühlplatte ausgebildet ist und die Kühlplatte eine aufeinanderfolgende Anordnung von Einzelelementen umfaßt, welche insgesamt die Funktionen Gasraumtrennung und Kühlung erfüllen.

13. Integraler PEM-Brennstoffzellen-Heizungsmodul nach Anspruch 12, wobei die aufeinanderfolgenden Elemente bestehen aus: Bipolarplatte (6a), Dichtung (6b), Kontaktierungselement (6c), Bipolarplatte (6a).

14. Integraler PEM-Brennstoffzellen-Heizungsmodul nach Anspruch 13, wobei auf die Bipolarplatte (6a) als Außenelement die Dichtung (6b) sowie als Innenelement das Kontaktierungselement (6c) aufsitzt.

15. PEM-Brennstoffzellenstapel zur Verwendung in einem PEM-Brennstoffzellenstapel-Heizmodul und nach mindestens einem der Ansprüche 1-14, wobei die Bipolarplatte (6) eine aufeinanderfolgende Anordnung von Einzelelementen aufweist, welche insgesamt die Funktionen Gasraumtrennung und Gasverteilung erfüllen.

16. PEM-Brennstoffzellenstapel nach Anspruch 15, wobei die aufeinanderfolgenden Elemente zwischen zwei Membranen (3) bestehen aus: Dichtung (14), Stützelement (13), Dichtung (12), Gasverteilungseinheit (5), Bipolarplatte (6), Gasverteilungselement (7), gegebenenfalls mit integrierter Dichtung, Dichtung (12), Stützelement (13), Dichtung (14).

17. PEM-Brennstoffzellenstapel nach Anspruch 16, wobei auf die Bipolarplatte (6) als Außenelement die Dichtung (12) und das Stützelement (13) sowie als Innenelement die Gasverteilungseinheit (5) aufsitzt.

18. PEM-Brennstoffzellenstapel nach Anspruch 16 und/oder 17, wobei die auf der Bipolarplatte (6) aufsitzende Dichtung (12) einen größeren Ausschnitt als das darüberliegende Stützelement (13) aufweist, so daß der Rand des Gasverteilungselements (5) von dem Stützelement (13) abgedeckt wird.

19. PEM-Brennstoffzellenstapel nach mindestens einem der Ansprüche 15 bis 18, wobei die Bipolarplatte (6) als Bipolar-/Kühlplatte ausgebildet ist und die Kühlplatte eine aufeinanderfolgende Anordnung von Einzelelementen umfaßt, welche insgesamt die Funktionen Gasraumtrennung und Kühlung erfüllen.

20. PEM-Brennstoffzellenstapel nach Anspruch 19, wobei die aufeinanderfolgenden Elemente bestehen aus: Bipolarplatte (6a), Dichtung (6b), Kontaktierungselement (6c), Bipolarplatte (6a).

21. PEM-Brennstoffzellenstapel nach Anspruch 20, wobei auf die Bipolarplatte (6a) als Außenelement die Dichtung (6b) sowie als Innenelement das Kontaktierungselement (6c) aufsitzt.

22. Verwendung eines PEM-Brennstoffzellen-Heizungsmoduls nach mindestens einem der Ansprüche 1 bis 14 in einer Brennstoffzellenanlage für die Hausenergieversorgung.

## Claims

1. Integral polymer-electrolyte membrane (PEM) fuel cell heating module, comprising a PEM fuel cell stack, wherein each fuel cell of the stack comprises a polymer-electrolyte membrane (3), an anode on one side of the membrane and a cathode (4) on the other side of the membrane, a gas distribution layer (5) on the anode side, a gas distribution layer (7) on the cathode side, as well as bipolar plates (6), which border the gas distribution layers (5, 7), wherein the anode is designed as a three-layered anode, which comprises a CO and/or methanol vapour oxidation-selective catalyst layer (1) on the side facing away from the membrane and an electrochemically active layer (2) on the side facing the membrane as well as a contact layer made from porous carbon paper between the layers (1) and (2), and wherein the gas distribution layer (7) has air channels (15) with free inlet and outlet openings:
a thermally insulated, gas-tight, tubular hollow jacket (M) surrounding the PEM fuel cell stack;
a methanol reformer (R), which produces a hydrogen combustible gas containing CO and methanol vapour from steam and methanol, wherein steam production and
reformer heating are effected by a catalytic residual gas burner (B), and
a circulation fan (L) arranged within the hollow jacket (M) which circulates damp air through the air channels (15) of the gas distribution layer (7).

2. Integral PEM fuel cell heating module according to claim 1, wherein the methanol reformer (R) with residual gas burner (B) is arranged above the PEM fuel cell stack and within the hollow jacket (M).

3. Integral PEM fuel cell heating module according to claim 2, wherein the methanol reformer (R) with catalytic residual gas burner (B) is arranged so that it is additionally heated by the circulating, warm circulating air.

4. Integral PEM fuel cell heating module according to claim 1, wherein the methanol reformer (R) with residual gas burner (B) are combined together with a reformer gas start tank and an electrochemical H₂ compressor to form an external unit.

5. Integral PEM fuel cell heating module according to at least one of claims 1 to 4, wherein a heat exchanger conveying cooling water, which absorbs the heat of the circulating air flow via its cooling water and uncouples for heating purposes, so that the temperature difference within the PEM fuel cell stack is not more than about 10°C, is arranged at the outlet of the air channels (15) within the hollow jacket.

6. Integral PEM fuel cell heating module according to at least one of claims 1 to 5, wherein the circulation fan (L) is a fan propeller.

7. Integral PEM fuel cell heating module according to at least one of claims 1 to 6, wherein the oxidation-selective catalyst layer (1) of the three-layered anode comprises an electrically conducting matrix (8) and an oxidic support material, which is covered with metallic, oxidation-selective catalyst particles (9).

8. Integral PEM fuel cell heating module according to at least one of claims 1 to 7, wherein the bipolar plate (6) has a sequential arrangement of individual elements, which on the whole fulfil the functions of gas phase separation and gas distribution.

9. Integral PEM fuel cell heating module according to claim 8, wherein the sequential elements between two membranes (3) consist of: seal (14), supporting element (13), seal (12), gas distribution unit (5), bipolar plate (6), gas distribution element (7), optionally with integrated seal, seal (12), supporting element (13), seal (14).

10. Integral PEM fuel cell heating module according to claim 9, wherein the seal (12) and the supporting element (13) as outer element as well as the gas distribution unit (5) as inner element sits on the bipolar plate (6).

11. Integral PEM fuel cell heating module according to claim 9 and/or 10, wherein the seal (12) sitting on the bipolar plate (6) has a greater cutout than the supporting element (13) lying thereabove, so that the edge of the gas distribution element (5) is covered by the supporting element (13).

12. Integral PEM fuel cell heating module according to at least one of claims 1-11, wherein the bipolar plate (6) is designed as a bipolar/cooling plate and the cooling plate comprises a sequential arrangement of individual elements, which on the whole fulfil the functions of gas phase separation and cooling.

13. Integral PEM fuel cell heating module according to claim 12, wherein the sequential elements consist of: bipolar plate (6a), seal (6b), contacting element (6c), bipolar plate (6a).

14. Integral PEM fuel cell heating module according to claim 13, wherein the sequential the seal (6b) as outer element and the contacting element (6c) as inner element sits on the bipolar plate (6a).

15. PEM fuel cell stack for use in a PEM fuel cell stack heating module and according to at least one of claims 1-14, wherein the bipolar plate (6) has a sequential arrangement of individual elements, which on the whole fulfil the functions of gas phase separation and gas distribution.

16. PEM fuel cell stack according to claim 15, wherein the sequential elements between two membranes (3) consist of: seal (14), supporting element (13), seal (12), gas distribution unit (5), bipolar plate (6), gas distribution element (7), optionally with integrated seal, seal (12), supporting element (13), seal (14).

17. PEM fuel cell stack according to claim 16, wherein the seal (12) and the supporting element (13) as outer element as well as the gas distribution unit (5) as inner element sits on the bipolar plate (6).

18. PEM fuel cell stack according to claim 16 and/or 17, wherein the seal (12) sitting on the bipolar plate (6) has a greater cutout than the supporting element (13) lying thereabove, so that the edge of the gas distribution element (5) is covered by the supporting element (13).

19. PEM fuel cell stack according to at least one of claims 15 to 18, wherein the bipolar plate (6) is designed as a bipolar/cooling plate and the cooling plate comprises a sequential arrangement of individual elements, which on the whole fulfil the functions of gas phase separation and cooling.

20. PEM fuel cell stack according to claim 19, wherein the sequential elements consist of: bipolar plate (6a), seal (6b), contacting element (6c), bipolar plate (6a).

21. PEM fuel cell stack according to claim 20, wherein the seal (6b) as outer element and the contacting element (6c) as inner element sits on the bipolar plate (6a).

22. Use of a PEM fuel cell heating module according to at least one of claims 1 to 14 in a fuel cell plant for supplying household energy.

## Revendications

1. Module monobloc de chauffage à piles à combustible à membrane électrolytique polymère (PEM) comprenant
un empilage de piles à combustible PEM, chaque pile à combustible de l'empilage comprenant une membrane électrolytique polymère (3), une anode située sur une face de la membrane et une cathode (4) située sur l'autre face de la membrane, une couche de distribution de gaz (5) située sur le côté anode, une couche de distribution de gaz (7) située sur le côté cathode ainsi que des plaques bipolaires (6), qui jouxtent les couches de distribution de gaz (5, 7), l'anode étant réalisée sous la forme d'une anode à trois couches, qui comprend une couche de catalyseur (1) d'oxydation sélective pour le C0 et/ou la vapeur de méthanol et est disposée sur la face située à l'opposé de la membrane et une couche (2) active du point de vue électrochimique, située sur la face tournée vers la membrane, ainsi qu'une couche de contact formée d'un papier carbone poreux disposé entre les couches (1) et (2), la couche de distribution de gaz (7) comportant des canaux de circulation d'air (15) possédant des ouvertures d'entrée et de sortie libre ;
une enveloppe creuse de forme tubulaire (M) entourant l'empilage de piles à combustible PEM, isolée thermiquement et imperméable au gaz ;
un reformeur de méthanol (R), qui à partir de la vapeur d'eau et de méthanol produit un gaz combustible à base d'hydrogène contenant du CO et de la vapeur de méthanol, la production de vapeur d'eau et le chauffage du reformeur étant réalisés au moyen d'un brûleur catalytique à gaz résiduel (B) ; et
un ventilateur de circulation d'air (L), qui est disposé à l'intérieur de l'enveloppe creuse (M) et qui fait circuler de l'air humide dans les canaux de circulation d'air (15) de la couche de distribution de gaz (7).

2. Module monobloc de chauffage à piles à combustible PEM selon la revendication 1, dans lequel le reformeur de méthanol (R) équipé du brûleur à gaz résiduel (B) est disposé au-dessus de l'empilage de piles à combustible PEM et à l'intérieur de l'enveloppe creuse (M).

3. Module monobloc de chauffage à piles à combustible PEM selon la revendication 2, dans lequel le reformeur de méthanol (R) équipé du brûleur catalytique à gaz résiduel (B) est disposé de telle sorte qu'il est chauffé en supplément par l'air chaud circulant.

4. Module monobloc de chauffage à piles à combustible PEM selon la revendication 1, dans lequel le reformeur de méthanol (R) équipé du brûleur à gaz résiduel (B) est rassemblé conjointement avec une cuve de démarrage du gaz du reformeur et un compresseur électrochimique à H₂ pour former une unité externe.

5. Module monobloc de chauffage à piles à combustible PEM selon au moins l'une des revendications 1 à 4, dans lequel à la sortie des canaux de circulation d'air (15) à l'intérieur de l'enveloppe creuse est disposé un échangeur de chaleur, qui véhicule de l'eau de refroidissement, qui reçoit, par l'intermédiaire de son eau de refroidissement, la chaleur du courant d'air circulant et qui est découplé à des fins de chauffage de telle sorte que la différence de température à l'intérieur de l'empilage de piles à combustible PEM n'est pas égale à plus d'environ 10°C.

6. Module monobloc de chauffage à piles à combustible PEM selon au moins l'une des revendications 1 à 5, dans lequel le ventilateur de circulation d'air (L) est un rotor-ventilateur.

7. Module monobloc de chauffage à piles à combustible PEM selon au moins l'une des revendications 1 à 6, dans lequel la couche de catalyseur (1), sélective du point de vue de l'oxydation, de l'anode à trois couches comprend une matrice électriquement conductrice (8) et un matériau de support oxydant, qui est recouvert par des particules de catalyseur métallique (9) sélectives pour l'oxydation.

8. Module monobloc de chauffage à piles à combustible PEM selon au moins l'une des revendications 1 à 7, dans lequel la plaque bipolaire (6) comporte une disposition d'éléments individuels successifs, qui assument globalement la fonction de séparation spatiale du gaz et de distribution du gaz.

9. Module monobloc de chauffage à piles à combustible PEM selon la revendication 8, dans lequel les éléments successifs disposés entre deux membranes (3) sont constitués par: une garniture d'étanchéité (14), un élément d'appui (13), une garniture d'étanchéité (12), une unité de distribution de gaz (5), une plaque bipolaire (6), un élément de distribution de gaz (7) éventuellement pourvu d'une garniture d'étanchéité intégrée, une garniture d'étanchéité (12), un élément d'appui (13), une garniture d'étanchéité (14).

10. Module monobloc de chauffage à piles à combustible PEM selon la revendication 9, dans lequel la plaque bipolaire (6) supporte la garniture d'étanchéité (12) et l'élément d'appui (13) en tant qu'éléments extérieurs, ainsi que l'unité de distribution de gaz (5) en tant qu'élément intérieur.

11. Module monobloc de chauffage à piles à combustible PEM selon la revendication 9 et/ou 10, dans lequel la garniture d'étanchéité (12) en appui sur la plaque bipolaire (6) possède une découpe plus étendue que l'élément d'appui superposé (13) de sorte que le bord de l'élément de distribution de gaz (5) est recouvert par l'élément d'appui (13).

12. Module monobloc de chauffage à piles à combustible PEM selon au moins l'une des revendications 1-11, dans lequel la plaque bipolaire (6) est agencée sous la forme d'une plaque bipolaire/plaque de refroidissement, et la plaque de refroidissement comprend un ensemble d'éléments individuels successifs, qui assument globalement les fonctions de séparation spatiale du gaz et de refroidissement.

13. Module monobloc de chauffage à piles à combustible PEM selon la revendication 12, dans lequel les éléments successifs sont constitués par: une plaque bipolaire (6a), une garniture d'étanchéité (6b), des éléments de contact (6c), une plaque bipolaire (6a).

14. Module monobloc de chauffage à piles à combustible PEM selon la revendication 13, dans lequel la garniture d'étanchéité (6b) en tant qu'élément extérieur et l'élément de contact (6c) en tant qu'élément intérieur prennent appui sur la plaque bipolaire (6a).

15. Empilage de piles à combustible destiné à être utilisé dans un module de chauffage à empilage de piles à combustion PEM et selon au moins selon l'une des revendications 1-14, dans lequel la plaque bipolaire (6) comporte une disposition d'éléments individuels successifs, qui assument globalement des fonctions de séparation spatiale du gaz et de distribution du gaz.

16. Empilage de piles à combustible PEM selon la revendication 15, dans lequel les éléments successifs entre deux membranes (3) sont constitués par: une garniture d'étanchéité (14), un élément d'appui (13), une garniture d'étanchéité (12), une unité de distribution de gaz (5), une plaque bipolaire (6), un élément de distribution de gaz (7) éventuellement pourvu d'une garniture d'étanchéité intégrée, une garniture d'étanchéité (12), un élément d'appui (13), une garniture d'étanchéité (14).

17. Empilage de piles à combustible PEM selon la revendication 16, dans lequel la garniture d'étanchéité (12) et l'élément d'appui (13), en tant qu'éléments extérieurs, ainsi que l'unité de distribution de gaz (5) en tant qu'élément intérieur, prennent appui sur la plaque bipolaire (6).

18. Empilage de piles à combustible PEM selon la revendication 16 et/ou 17, dans lequel la garniture d'étanchéité (12), qui prend appui sur la plaque bipolaire (6), possède une découpe plus étendue que l'élément d'appui superposé (13) de sorte que le bord de l'élément de distribution de gaz (5) est recouvert par l'élément d'appui (13).

19. Empilage de piles à combustibles PEM selon au moins l'une des revendications 15 à 18, dans lequel la plaque bipolaire (6) est agencée sous la forme d'une plaque bipolaire/plaque de refroidissement, et la plaque de refroidissement comprend une disposition superposée d'éléments individuels, qui assument globalement les fonctions de séparation spatiale du gaz et de refroidissement.

20. Empilage de piles à combustible PEM selon la revendication 19, dans lequel les éléments successifs sont constitués par: une plaque bipolaire (6a), une garniture d'étanchéité (6b), un élément de contact (6c), une plaque bipolaire (6a).

21. Empilage de piles à combustible PEM selon la revendication 20, dans lequel la garniture d'étanchéité (6b) en tant qu'élément extérieur et l'élément de contact (6c) en tant qu'élément intérieur prennent appui sur la plaque bipolaire (6a).

22. Utilisation d'un module de chauffage à piles à combustible PEM selon au moins l'une des revendications 1 à 14 dans une installation de piles à combustible pour l'alimentation en énergie domestique.
